Europäisches Patentamt

European Patent Office

Office européen des brevets

(19)

(11) Publication number: **0 082 830**

**A2**

(12) **EUROPEAN PATENT APPLICATION**

(21) Application number: 82850266.6

(22) Date of filing: 22.12.82

(51) Int. Cl.³: **G 01 B 11/00**
**G 02 B 27/60**

(30) Priority: 23.12.81 SE 8107765

(43) Date of publication of application:
29.06.83 Bulletin 83/26

(84) Designated Contracting States:
AT BE CH DE FR GB IT LI NL

(71) Applicant: Abramson, Nils Hugo Leopold
Valhallavägen 52
S-115 36 Stockholm(SE)

(72) Inventor: Abramson, Nils Hugo Leopold
Valhallavägen 52
S-115 36 Stockholm(SE)

(74) Representative: Lindblom, Erik J.
Caroline Östbergs väg 5
S-122 35 Enskede(SE)

(54) **Arrangement for the contactless and artificial determination of the two- or three-dimensional shape of an object.**

(57) Arrangement for the contactless and artificial determination of the two- or three-dimensional shape of an object (1) by illuminating the object with a light source (2) produced from two coherent illumination points which are separated from each other. As a result primary real interference patterns are produced in the direction of the light beams (5b). The object (1) is observed by means of a primary imaginary interference pattern obtained via two simultaneously-connected coherent observation points (3) which are separated from each other. The combination of the two interference patterns gives a secondary pattern of Moiré lines which provides an artificial image (4) which is significant for the shape of the object.

Fig.1

Croydon Printing Company Ltd.

TITLE OF INVENTION:  Arrangement for the contactless and artificial determination of the two - or three - dimensional shape of an object.

## TECHNICAL FIELD

The present invention relates to an arrangement for the contactless and artificial determination of the two - or three - dimensional shape of an object. One essential prerequisite for the function of the invention is that the object be illuminated from a light source which can be regarded as being produced from two coherent illumination points, separated from each other, so that primary real interference patterns are produced in the direction of the light rays.

## STATE OF THE ART

The method is already known of optically evaluating the three-dimensional shape of an object, its possible deformation and vibration either by means of Moiré, speckle or holographic methods. These three methods are based on fundamentally similar conditions and a more detailed description of these methods is provided in "Interferometric Information Proceedings from Applications of Holography and Optical Data Processing, Jerusalem, August 1976, page 269".

In the publication "Interferometric Holography without Holograms" Laser Focus, December 1968, page 26, a description is given of a Moire' method for measuring dimension, deformation and vibration with the aid of projected interference lines.

It is also already known that the resolution with all optical measurements of dimension can be derived from three categories.

(a)    Two coherent illumination points (e.g. projected interference lines)

(b)    Two coherent observation points (e.g. the resolution of a microscope depends on the angle from the object to two diametral points on the objective

(c)     One illumination point and an observation point
        coherent therewith (e.g. holographic interferometry where the reference beam makes the
        observation coherent).

## DESCRIPTION OF THE INVENTION

### TECHNICAL PROBLEM

The fact has emerged that with previously known arrangements
for the contactless and artificial determination of the two- or
three-dimensional shape of an object, by illuminating the object
with a light source which can be regarded as being produced from
two coherent illumination points which are separated to some extent, it has proved difficult to obtain a desired adjustment of
sensitivity from low sensitivity, which is suitable for evaluating
level lines and planeness measurements, up to high sensitivity,
which is desirable for precise measurements where high resolution
is required using one and the same instrument.

It is obvious that very major problems are involved in
creating, using simple means, conditions such that measurements
can take place with high resolution. Major technical problems are
involved in creating conditions such that neither the projecting
optical system nor the observing optical system needs to contain
lenses which can resolve the lines projected on the object.

Hence it is a technical problem to create a measuring arrangement having a sensitivity which is less than the extremely high
sensitivity of conventional interferometry, but greater than the
relatively low sensitivity of the conventional Moiré technique.

Furthermore it is a difficult technical problem to create
conditions such that the information obtained regarding the artificial shape of the object can be easily evaluated by way of
electrical and electronic circuits, and for these circuits, using
simple signal-comparing circuits, to compare the shape of an object with the artificial shape of another object.

Finally it is a technical problem in conjunction with the
measurements described above to likewise be able to assess and
measure the vibrations of an object.

0082830

## THE SOLUTION

Hence the present invention aims at creating an arrangement for the contactless and artificial determination of the two- or three-dimensional shape of an object where the technical problems outlined above are solved in that the object is illuminated in a known manner using a light source produced from two coherent illumination points which are separated from each other, where primary real interference patterns or lines are produced in the direction of the light rays.

Taking as a basis this light source, which is intended to illuminate the object, the present invention requires that the object be observed by means of a primary imaginary interference pattern obtained via two simultaneously-connected coherent observation points which are separated from each other, where the combination of the two interference patterns provides a secondary pattern of Moiré lines, comprising an artificial image which is significant for the shape of the object.

In the present invention it is proposed that the illuminating light source produced from two coherent illumination points which are separated from each other comprises a laser and an interferometer. As a suitable embodiment the invention proposes a "Michelson interferometer". The two simultaneously connected coherent observation points which are separated from each other can advantageously be arranged in one interferometer. As a suitable embodiment the invention proposes a "Mach-Zehnder interferometer".

Since the primary real interference patterns and the primary imaginary interference patterns can be regarded as being produced, or formed, by two points which are separated from each other and since the distance between the points is a measure of the resolution, it is proposed that it should be possible to regulate the distance between the points, by this means increasing or reducing the resolution. The regulation of distance can be undertaken by rotation of two rotable plane-parallel glass plates.

To obtain a visual image of the artificial shape it is proposed that the secondary pattern of Moiré lines be transmitted to an image-representing device, e.g. a TV set. Obviously transmission can take place to an image-processing device, i.e. a device where the image is transformed into various signals, or to an image-storage device, i.e. a memory arrangement in which it should be possible to store a reference pattern.

In the latter application an artificial image which corresponds to an actual object can be compared with the reference pattern and if a predetermined difference is exceeded, a signal is generated.

In accordance with the invention an arrangement as described above can advantageously be employed on a production line for objects and on this production line the arrangement can carry out quality control regarding the external shape.

In accordance with the invention an arrangement as described above can also be employed advantageously on a production line for objects and, dependent on the external shape of the object, it can control production so that if required it can change the shape of the object in respect of a reference pattern or standard pattern.

The essential characteristic features of an arrangement in accordance with the present invention are described in the characteristic portion of patent claim 1 which follows.

BRIEF DESCRIPTION OF DIAGRAMS

A proposed embodiment exhibiting the significant features of the present invention will be described in greater detail by reference to the appended drawings where:

fig. 1   shows the fundamental layout of an arrangement
         in accordance with the present invention, fig. 2   shows schematically the fundamental principle
         of the present invention,

fig. 3   shows in the form of a block diagram an
         arrangement for comparing a secondary pattern
         of lines which has been obtained with a standard pattern,

fig. 4   shows three different images with different
         distances between the secondary Moiré lines,

fig. 5   shows in greatly simplified form a production
         line employing an arrangement in accordance
         with the invention for quality control of the
         external shape of manufactured objects and

fig. 6    shows in greatly simplified form a production
          line employing an arrangement in accordance
          with the invention for changing, if required,
          the shape of the object with reference to a
          standard pattern.

## DESCRIPTION OF THE EMBODIMENT PROPOSED HERE

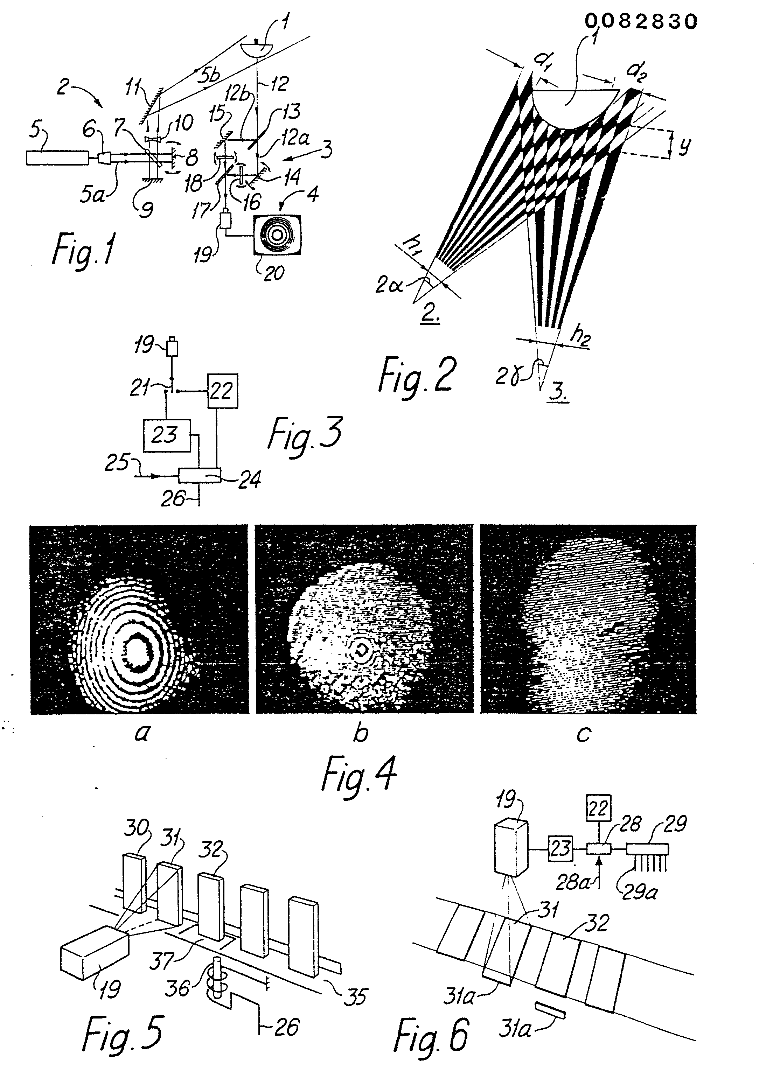

Fig. 1 thus shows the fundamental layout of an arrangement
in accordance with the present invention.

The arrangement is intended to permit the contactless and
artificial determination of the two- or three-dimensional shape
of an object and where the object 1 has in the embodiment here
been illustrated as a spherical surface, but it is obvious that
many two- or three-dimensional shapes can be evaluated in accordance with the present invention.

The object 1 is illuminated by a light source which can be
regarded as being produced from two coherent illumination points
which are separated from each other so as to form primary real
interference patterns in the direction of the light beam.

For this purpose the embodiment is provided with a "Michelson
interferometer", which is designated as 2.

The object 1 is to be observed, and this is done by means of
a primary imaginary interference pattern.  This pattern is obtained
by observation from two simultaneously-connected coherent observation points which are separated from each other.  This can also
take place in an interferometer.

For this purpose the embodiment proposes a "Mach-Zehnder
interferometer" which is designated as 3.

The combination of these two interference patterns provides
a secondary pattern of Moiré lines which makes up an artificial
image significant for the shape of the object.  In the case of a
spherical surface the artificial image becomes a number of concentrically-shaped rings with the line thicknesses decreasing
from the centre outwards, this being illustrated by reference
notation number 4.

Fig. 1 illustrates a proposed embodiment which has proved
capable of functioning during practical tests.  This embodiment
employs a laser device 5 of a previously known type, the light

0082830

rays of which pass through a beam expander 6, after which the beam 5a (actually the bundle of beams) passes through a beam divider 7.

The beam 5a now passes through the beam divider 7 and is reflected against a mirror 8, the reflected beam from which is again reflected by the beam divider, and then its rear face, where the beam is reflected once again to pass through a spreading lens 10, after this forming a beam bundle 5b. This is allowed to be reflected in a mirror 11 so as to direct the beam bundle against the object 1.

A second portion of the beam 5a is reflected in the front face of the beam divider 7 against a mirror 9, this beam bundle being reflected so as to pass through the beam divider 7 and the spreading lens 10, and by this means it is reunited with the beam bundle 5b. By means of this arrangement the beam bundle 5b consists of a light flux originating from two coherent illumination points which are slightly separated.

The object 1 is observed in that the light flux from the beam bundle 5b reflected from object 1 is intercepted by a beam divider 13, where component 12a passes to a mirror 14 and the second component 12b passes to a second mirror 15.

Component 12a is reflected in the mirror 14 and passes through a plane-parallel glass plate 16 to a beam divider 17.

Component 12b is reflected in mirror 15, passes through a plane-parallel glass plate 18 together with beam divider 17 and the two components 12a and 12b are merged in the beam divider 17 and observed by a TV camera 19. This TV camera 19 is connected to an image screen 20 forming part of a TV set, on which the artificial image 4 of object 1 appears.

In accordance with the embodiment illustrated in fig. 1, it should be noted particularly that the mirror 8 is rotable. By rotating this mirror regulation and adaptation of the distance between the two separated light points is obtained. The greater the distance, the greater the resolution.

The mirror 14, like the glass plates 16 and 18, is also rotable, so that by this means it is possible to regulate and adjust the distance between the two separate observation points.

The distance between the light points and the distance between the observation points should be kept identical.

0082830

The technical effects connected with the invention will now be described in greater detail by reference to fig. 2.

The illuminating portion 2 should hence comprise two coherent illumination points separated somewhat from each other (obtained for example from a laser and a Michelson interferometer). The two coherent illumination points generate interference lines, known as Young's fringes, in space in the form of hyperboloids of rotation, the two common focuses of which comprise the two points which are assumed to be separated by a distance $h_1$. A distance $d_1$, i.e. the distance between two adjacent hyperboloid shells is:

$$d_1 = \frac{\lambda}{2 \sin\alpha}$$

where $\lambda$ is the wavelength of the light and $2\alpha$ is the angle between the two illumination points viewed from the object.

The observing portion 3 comprises two simultaneously-connected coherent observation points which are separated at some distance from each other and which view the object 1. Such observations can be undertaken in an interferometer (e.g. of the Mach-Zehnder type). An imaginary system of interference lines is obtained in the form of hyperboloids of rotation, the two focuses of which comprise the two coherent observation points separated by a distance $h_2$.

A distance $d_2$, i.e. the distance between two adjacent hyperboloid shells is:

$$d_2 = \frac{\lambda}{2 \sin\gamma}$$

where $2\gamma$ is the angle between the two observation points as viewed from the object.

In this description the illuminating and the observing line systems respectively have been designated as the primary interference lines or patterns.

In the observation portion 3 the displacement $h_2$ is best achieved by twisting two plane-parallel glass plates 16, 18 in the two portions of the Mach-Zehnder interferometer. In order to displace the point of intersection between the displaced observation beams to the surface of the object one of the mirrors 14, having a silvered surface, in the interferometer has to be twisted.

If the plane-parallel glass plate 16,18 is twisted through an angle $\emptyset$ the displacement $h_2$ between the observation points is:

$$h_2 = \frac{t - \sin\emptyset}{2 (n^2 - \sin^2\emptyset)^{0.5}}$$

where "t" is the thickness of the glass plate and "n" is the refractive index of the glass.

A third secondary pattern of Moiré lines 4 is formed between the illuminating primary pattern of interference lines and the observing primary interference line pattern. This pattern is the one to be employed for the measurements.

If the distance is so great from the interferometer 2 to the object 1 that the primary interference line pattern can be taken approximately as plane-parallel surfaces with equal pitch, the following applies to a spacing (y) between the secondary Moiré lines:

$$y = \frac{d_1 \cdot d_2}{(d_1^2 + d_2^2 - 2 d_1 d_2 \cos\beta)^{0.5}}$$

where

$d_1$    is the distance between the primary illuminating lines

$d_2$    is the distance between the primary observing lines and

$\beta$    is the angle between the direction of illumination and observation in relation to the object.

The intersection with the object by the secondary Moiré lines is a measure of the contour or flatness of the object.

The description given above shows that using extremely simple means it is possible to obtain a varying degree of resolution of the artificial image 4 of the shape of the object 1. This artificial image is governed by the shape of the object 1.

The practical application of the present invention can then

0082830

be to undertake the contactless and artificial determination of the two- or three-dimensional shape of an object during production control. For this purpose it can be advisable, as shown in fig. 3, to have a TV camera 19 which via a switching device 21 transmits the artificial image to a memory 22 where the image 4 is stored in the form of a reference pattern or standard pattern. Subsequently the switching device 21 can adopt a position where the artificial shape of each subsequent object is transmitted to a memory 23 and where the artificial shape 22 of the standard pattern can be compared with the actual artificial shape in the memory 23 in a signal comparator 24. The comparator 24 is actuated by a signal on conductor 25.

It can then be appropriate to design the comparator 24 in such a way that as soon as the pattern prevailing at the time in the memory 23 deviates by a predetermined discrepancy amount from the standard pattern in the memory, in memory 22 an output signal is formed on conductor 26 as an indication that the object has not been found to be faultless.

In fig. 4 image "a" shows the artificial image obtained from a spherical surface for an object 1 and where the image "a" is adjusted at one line per mm. Image "b" is reproduced at 3.5 lines per mm, whilst image "c" is reproduced at 10 lines per mm.

Fig. 5 shows in greatly simplified form a production line for objects 30,31,32 transported along a transport path 35 and where a control device employs a sensing arrangement of the design described above. The two- or three-dimensional shape of each object, for example object 31, is evaluated. The artificial image of the object 1 which can be evaluated by the TV camera 19 is compared, as shown in fig. 3, with a standard pattern stored in a memory 22. In the event of agreement, or agreement within predetermined limits, the object is passed and conveyed further by the transport path or conveyor belt 35.

In the event of lack of conformity, which exceeds predetermined limits and requirements imposed, the shape of the object is not approved and the output signal 26 then activates a release mechanism 36 which is displaced upwards and tips the object away from the transport path 34 at section 37. The signal on conductor 26 should be somewhat delayed, this dependent on the speed of the transport path 35.

Fig. 6 shows in greatly simplified form a production line for the object in which a control device is incorporated utilising a sensing arrangement of the type described above. The two- or three-dimensional shape of each object, e.g. object 31, is evaluated. The artificial image of object 31 which can be evaluated by the TV camera 19 is compared, as shown in fig. 3, with a standard pattern stored in the memory 22.

In the event of a discrepancy, due to the projecting portion 31a, an output signal is generated in the control equipment which corresponds to the magnitude and location of the discrepancy. This signal is designed to control production of the object so that either subsequent objects or the actual object will subsequently be given a shape which is closer to that of the standard pattern.

This latter variation is illustrated in fig. 6 where the TV camera 19 evaluates the shape of the object 31 having the external tab 31a. The artificial shape is transmitted to the memory 23 and in a scanning circuit 28 which is activated via a signal conductor 28a, the discrepancy is established. Via a circuit 29 the magnitude and location of the discrepancy can be evaluated and in the event of a discrepancy caused by a projecting tab 31a a signal is obtained on conductor 29a, which signal activates a punching device, not illustrated in the diagram, which removes the tab 31a so as to form the object 32 which is then given a shape which is closer to that of the standard pattern.

There is nothing to prevent the use of arrangements as shown in fig. 5 and the arrangement as shown in fig. 6 on one and the same production line.

Naturally the invention is not restricted to the embodiments described above by way of example but can also be subjected to modifications within the framework of the following patent claims.

By artificial determination of the shape of an object it is meant that the actual form of the object deviates from the image obtained after evaluation.

It is obvious that this image is on the one hand governed by the actual shape of the object, but on the other hand the image from a single object, viewed at a single angle, can exhibit different shapes by selecting interference lines which are more or less closely spaced, different electrical or electronic circuits
for processing the signals received, and the like.

PATENT CLAIMS

1. Arrangement for the contactless and artificial determination of the two- or three-dimensional shape of an object (1) by the object being illuminated from a device producing two coherent illumination points which are separated from each other, where primary real interference patterns are formed in the direction of the light beams(5b), characterised in that the object (1) is via further devices observed with the aid of a primary imaginary interference pattern obtained via two simultaneously-connected coherent observation points (3) which are separated from each other, where the combination of the two interference patterns gives a secondary pattern of Moiré lines which provides an artificial image (4) which is significant for the shape of the object.

2. Arrangement as in patent claim 1, characterised in that an illuminating light source (2) produces two coherent illumination points and comprises a laser and an interferometer, for example a Michelson interferometer.

3. Arrangement as in patent claim 1, characterised in that the two simultaneously-connected coherent observation points are arranged in an interferometer, for example a Mach-Zehnder interferometer.

4. Arrangement as in patent claims 1, 2 or 3, characterised in that the primary real interference pattern (5b) and the primary imaginary interference pattern (12) is generated or viewed from two points (h1, h2) which are separated from each other, the distance between which can be regulated so as to increase or reduce the resolution.

5. Arrangement as in patent claim 4, characterised in that the distance can be regulated, inter alia via two rotable plane-parallel glass plates (16, 18).

6. Arrangement as in patent claim 1, characterised in that the primary real interference pattern (5b) produced from a light source in conjunction with an interferometer and the primary imaginary interference pattern (12) observed via an interferometer are combined to form a secondary pattern of Moiré lines, and that this pattern is transmitted to an image-processing device (20) or to an image-storage device.

7.   Arrangement as in patent claim 6, characterised in that the secondary pattern of Moiré lines can be evaluated and arranged to be compared with a standard pattern and that a signal is obtained in the event of a predetermined difference.

8.   Control equipment incorporated in a production line for objects utilising an arrangement (19 in fig. 5) in accordance with any of the preceding patent claims, characterised in that the two- or three-dimensional shape of each object (30 - 32) is evaluated, that evaluated artificial images which are significant for the shape of the actual object are compared with a standard pattern, and that in the event of a predetermined discrepancy being exceeded a signal (26) is produced which is arranged to actuate means for removing the object concerned (31) from the production line.

9.   Control equipment incorporated in a production line for objects utilising an arrangement (19 in fig. 6) in accordance with any of the preceding patent claims, characterised in that the two- or three-dimensional shape of each object (31, 32) is evaluated, that the evaluated artificial image which is significant for the shape of the object concerned is compared with a standard pattern, that in the event of a discrepancy a signal (29a) which corresponds to the magnitude and location of the discrepancy is produced in the control equipment, which signal is arranged to control the production of the object so that either subsequent objects or the actual object will subsequently be given a shape (32) which is more closely matched to the standard pattern.

0082830

Fig.1

Fig.2

Fig.3

Fig.4

*a*

*b*

*c*

Fig.5

Fig.6